# EUROPEAN PATENT APPLICATION

(11) **EP 4 012 678 A1**
(43) Date of publication of application: **15.06.2022**
(21) Application number: 21214024.8
(22) Date of filing: 13.12.2021
(51) Int. Cl.: G08B 13/196, G08B 13/16, G08B 21/04, G08B 29/18

(54) **SECURITY SYSTEM**

(30) Priority: 14.12.2020 GB 202019713
(71) Applicant: Ava Video Security Limited, Uxbridge, Middlesex UB8 1JG (GB)
(72) Inventor: SUN, Haohai, 1364 Fornebu (NO)
(74) Representative: Mewburn Ellis LLP

(57) **Abstract**

A security system for detecting a predefined event at an entrance area. The system comprises a camera for visually monitoring the entrance area, a microphone device for detecting sound at the entrance area; and a processor. The processor is configured to receive a visual signal from the camera and an audio signal from the microphone device; and trigger an alert when both the visual signal and the audio signal indicate that the predefined event has occurred.

## Description

### Field of the Invention

The present invention relates to a security system for use in access control systems and particularly, although not exclusively, to a security system for event monitoring and detection.

### Background

Physical access to a building may be monitored and controlled by an access control system. An access control system determines who is allowed to enter and exit a building, and when. Traditionally, access control systems utilized locks and keys, whereby authorised individuals can gain access to a building if they have an appropriate key. Key cards which allow access to a building are also known. Alternatively, individuals without an appropriate key or key card can request access by ringing a doorbell to the building.

Many entrances to buildings are now equipped with security cameras, wherein personnel within the building or elsewhere can monitor a video stream received from the security camera(s) and grant access to the building if appropriate. Sometimes, a video stream showing an individual attempting to gain access to a building, either by using a key, key card or by ringing a doorbell, can be recorded and/or saved, for review at a later time.

However, it is also useful to monitor other, more unusual events. For example, unauthorised individuals may knock on the door at the entrance rather than press the doorbell, e.g. due to sanitation concerns, not seeing the doorbell, not realising the doorbell is functioning as they cannot hear the doorbell from outside the entrance, nobody inside the building hearing the doorbell, the doorbell is broken, etc. As another example, unwanted intruders may make sounds outside the entrance or knock on the door in order to check that the building is empty before breaking in, and/or may enter by force.

It is useful for an access control system to detect, locate and preferably visualise these unusual events.

Accordingly, it is known to provide door knocking detection systems comprising mechanical vibration sensors to detect vibrations caused by an individual knocking on the door. Personnel inside the building may be alerted to the detected vibrations caused by the knocking, and can then choose whether to grant access to the individual. However, these systems require complicated installation with wiring and sensors either mounted on or embedded within a door.

It is also known to provide an integrated microphone in or near a doorbell which can provide two-way audio communications between personnel inside the building and the individual requesting access. In particular, when the microphone detects a noise, personnel inside the building may be alerted, can communicate audibly with the individual, and can then choose whether to grant access. However, these microphones often detect environmental or random noise, which can trigger false detections. False detections are inconvenient for personnel inside the building.

The present invention has been devised in light of the above considerations.

### Summary of the Invention

According to a first aspect, embodiments of the invention provide a security system for detecting a predefined event at an entrance area, the system comprising:
a camera for visually monitoring the entrance area;
a microphone device for detecting sound at the entrance area; and
a processor configured to:
   receive a visual signal from the camera and an audio signal from the microphone device; and
   trigger an alert when both the visual signal and the audio signal indicate that the predefined event has occurred.

In this way, both the visual signal from the camera and the audio signal from the microphone device are required to indicate that the predefined event has occurred at the entrance area, before an alert indicating that the predefined event has occurred is triggered. In particular, the processor may be configured to only trigger the alert when both the visual signal and the audio signal indicate that the predefined event has occurred. Therefore, the likelihood of false detections is reduced. In particular, if only a camera is used to detect a predefined event, bad lighting conditions, imperfect viewing angles and object shielding may lead to false detections. Similarly, if only a microphone device is used to detect a predefined event, environmental or random noise may lead to false detections. Requiring both the camera and the microphone device to detect the predefined event at the entrance area, reduces the possibility of these false detections.

Furthermore, providing only a camera and a microphone device at the entrance area provides more flexible installation and is simpler to configure than door knocking detection systems comprising mechanical vibration sensors.

Optional features will now be set out.

The predefined event may be an event external to the camera and microphone device, e.g. a person requesting access at the entrance area, a person knocking on a door at the entrance area, for example.

The visual signal may indicate that the predefined event has occurred when a predefined object, or movement of any object, is detected by the camera. In particular, the processor may be configured to determine that the visual signal indicates that the predefined event has occurred when the visual signal indicates that movement of an object, or a predefined object, is detected by the camera. The predefined object may be a person for example.

The camera may be a video camera. The microphone device may be a microphone array comprising a plurality of microphones, including omnidirectional microphones and/or directional microphones.

Optionally, the visual signal may be a video signal. The audio signal may be a multichannel audio signal.

The security system may be configured to determine whether the visual signal indicates that the predefined event has occurred using a video analytics algorithm. The security system may also be configured to determine whether the audio signal indicates that the predefined event has occurred using an audio analytic algorithm, such as a directional audio analytics algorithm.

In some examples, the visual signal and the audio signal may be continuously received at the processor (and therefore continuously transmitted from the camera and microphone device to the processor). The visual and audio signals may be transmitted wirelessly, for example by WiFi (RTM) or BlueTooth (RTM) or by a wired connection. Thus, the processor may receive continuous video and audio streams of the entrance area.

The processor may be configured to (continuously) monitor the continuously received visual signal for an indication that the predefined event has occurred. As such, the processor may be configured to determine whether the visual signal indicates that the predefined event has occurred, and/or whether the audio signal indicates that the predefined event has occurred (e.g. using a video analytics algorithm and a directional audio analytics algorithm, respectively). The processor may be configured to trigger the alert when the visual signal and the audio signal both indicate that the predefined event has occurred within a predefined time period (which may be 10 seconds or less, 5 seconds or less, 3 seconds or less, 1 second or less, etc.) In this way, it can be ensured that sound detected by the microphone device corresponds to the movement of an object/the predefined object detected by the camera.

Alternatively, the visual signal and audio signal may only be received at the processor (and therefore transmitted from the camera/microphone device) when the predefined event has occurred, and therefore when the predefined event is detected by the camera/microphone device. In these examples, the receipt of the visual signal and/or audio signal at the processor itself may act as a trigger indicating that the predefined event has been detected by the camera/microphone device. The processor may then only trigger an alert when both the visual signal indicating that the predefined event has occurred, and the audio signal indicating that the predefined event has occurred, are received by the processor.

Optionally, the processor may be configured to trigger the alert when the visual signal and the audio signal, both indicating that the predefined event has occurred, are both received within a predefined time period (which may be 10 seconds or less, 5 seconds or less, 3 seconds or less, 1 second or less, etc.) In this way, it can be ensured that sound detected by the microphone device, corresponds to the movement of an object/the predefined object detected by the camera.

The audio signal may indicate that the predefined event has occurred when sound is detected by the microphone device. In particular, the processor be configured to determine that the audio signal indicates that the predefined event has occurred, when the audio signal indicates that sound is detected by the microphone device.

The visual signal may indicate that the predefined event has occurred when a person is detected in the camera's field of view. In other words, the processor may be configured to determine that the visual signal indicates that the predefined event has occurred, when the visual signal indicates that a person is present in the camera's field of view. The person may be detected using object recognition techniques (e.g. object classification techniques), for example by applying a pre-trained neural network (CNN, RCNN, etc.) to the visual signal.

Accordingly, the alert may be triggered by the processor when a person is detected by the camera. As such, the possibility of false detections resulting from other objects (e.g. animals) is reduced.

Alternatively/additionally, the visual signal may indicate that the predefined event has occurred when an object is detected as being located within a predefined area in the camera's field of view. The predefined area may be a portion of the camera's field of view, e.g. a predefined area surrounding (and including) the entrance area. The predefined area may therefore be an area smaller than the camera's total field of view. In particular, the processor may be configured to determine that the visual signal indicates that the predefined event has occurred, when the visual signal indicates that an object is located within a predefined area in the camera's field of view, using object localization techniques, for example. An example object localization technique may be to apply a pre-trained neural network (CNN, RCNN, etc.), trained to localize an object, to the visual signal. The object may be a person.

Accordingly, the alert may be triggered by the processor when an object (e.g. a person) is detected within a predefined area (e.g. an area close to an entrance), which may be smaller than the camera's field of view. Therefore, people passing the entrance area that are detected by the camera, but that do not enter the predefined area, and therefore do not come close to the entrance area/door, do not trigger the alert.

Alternatively/additionally, the visual signal may indicate that the predefined event has occurred when a predefined gesture is detected by the camera. The predefined gesture may be a predefined gesture performed by a person, such as a wave or one or more knocks on a door in the entrance area, for example. In particular, the processor may be configured to determine that the visual signal indicates that the predefined event has occurred, when the visual signal indicates that a predefined gesture is performed, e.g. using a gesture detection algorithm.

In some examples, the visual signal may indicate that the predefined event has occurred when all of the previously mentioned conditions are met, such that a person performing a predefined gesture is detected within a predefined area in the camera's field of view. As such, there is a three step approach to determining whether the visual signal indicates that the predefined event has occurred (e.g. (i) a person is detected, (ii) the person is within a predefined region, and (iii) the person is performing a knocking gesture). Therefore, the possibility of false detections is further reduced.

As mentioned above, the audio signal may indicate that the predefined event has occurred when sound is detected by the microphone device. In some examples, the audio signal may indicate that the predefined event has occurred when the sound detected by the microphone device meets one or more predefined criteria. For example, the predefined criteria may be that the sound is of a predefined type of sound (e.g. that the sound is a knock), or meets a predefined volume threshold. In particular, the processor may be configured to determine that the audio signal indicates that the predefined event has occurred when the audio signal indicates that the sound detected by the microphone meets a predefined criteria (e.g. predefined type of sound or predefined volume threshold), using sound event detection algorithms.

In some examples, the predefined criteria may be that the sound is of a predefined type corresponding to the predefined gesture detected by the camera.

Alternatively/additionally, the audio signal may indicate that the predefined event has occurred when the sound is determined to be originating from within a predefined area. The predefined area may be the same or corresponding predefined area for which an object may be detected in the camera's field of view. The predefined area may be a predefined area surrounding (and including) the entrance area. In particular, the processor may be configured to determine that the audio signal indicates that the predefined event has occurred, when the audio signal indicates that the sound is originating from within a predefined area.

The microphone device may use beamforming technology, and/or be configured to use spatial filtering techniques to detect sound only in the predefined area. In particular, sound from outside the predefined area may be cancelled using beamforming algorithms or spatial filtering. In some examples, the microphone device may comprise an acoustic beamformer configured to steer an acoustic beam to the predefined area (e.g. by selectively shifting a phase of each microphone in a microphone array). In this way, the microphone device may only detect sound in (e.g. originating from) the predefined area and/or may filter out sound detected elsewhere (e.g. sound originating from outside the predefined area).

The audio signal may indicate that the predefined event has occurred when the audio signal indicates that the predefined event has occurred when sound detected by the microphone is determined to be originating from within a predefined area, and the detected sound is of a predefined type of sound/volume. As such, there is a three step approach to determining whether the visual signal indicates that the predefined event has occurred (e.g. (i) sound is detected, (ii) the sound originates from within a predefined region, and (iii) the sound is of a predefined sound type, e.g. knocking). Therefore, the possibility of false detections is further reduced.

The visual signal may indicate that the predefined event has occurred when a person performing a predefined gesture is detected within a predefined area in the camera's field of view; and the audio signal may indicate that the predefined event has occurred when sound detected by the microphone is determined to be originating from within the predefined area in the camera's field of view, and the sound is determined to be of a predefined type of sound corresponding to the predefined gesture. In this way, the audio and visual signals are cross-referenced to determine whether the detected sound corresponds to the detected movement. For example, in order to trigger an alert, a person knocking on the door must be detected by both the camera and the microphone device.

The system may comprise a plurality of cameras, each for visually monitoring the entrance area. The processor may be configured to receive a visual signal from each of the plurality of cameras. Optionally, the processor may be configured to determine whether each visual signal from each of the plurality of cameras indicates that the predefined event has occurred.

The system may comprise a plurality of microphone devices, each for detecting sound at the entrance area. For example, the system may comprise a plurality of microphones, or a plurality of microphone arrays, each microphone array including a plurality of microphones including omnidirectional microphones and/or directional microphones. The processor may be configured to receive an audio signal from each of the microphone devices. Optionally, the processor may be configured to determine whether each audio signal from each of the plurality of microphone devices indicates that the predefined event has occurred.

The processor may be configured to trigger the alert when one or more of the plurality of visual signals and one or more of the plurality of audio signals indicate that the predefined event has occurred. Optionally, the processor may be configured to trigger the alert when a majority (or all) of the plurality of visual signals, and a majority (or all) of the plurality of audio signals, indicate that the predefined event has occurred.

The one or more cameras and one or more microphone devices may be for attaching to a wall, ceiling or a door at the entrance area to monitor a predefined area together.

The one or more cameras and one or more microphone devices may be attached to a wall, ceiling or door at the entrance area, and arranged to visually and audibly monitor the entrance area.

The processor may further be configured to store a record of the detected predefined event in a memory. The memory may form part of the security system, or may be distinct from the security system (e.g. the record may be in an external cloud server). For example, a record of the audio signal and visual signal may be stored in the memory, and the predefined events may be tagged. In this way, the predefined events can be analysed later for a history overview and to gain insights into the event history.

The processor may additionally be configured to tag the record of the detected predefined event in the memory. The tag may include information about the predefined event that can be analysed later to gain insights into the event history. The tag may enable users to find the detected predefined event in the memory using searching functionality.

The processor may be configured to trigger the alert to be transmitted to a computing device, such as an access control computing device. The alert received at the computing device may trigger an alert notification (e.g. a visual or audible notification) at the computing device, to notify an operator of the computing device that the predefined event has been detected. Thus the operator can be made aware that a person is knocking at the door in the entrance area, and can choose whether or not to grant access. The visual notification may be displayed on a display of the computing device. The audible notification may be generated by a speaker of the computing device.

Accordingly, the system may comprise a computing device, such as an access control computing device, wherein the computing device is configured to receive the alert triggered by the processor, and provide an alert notification to a user. The alert notification may be a visual notification displayed on a display of the computing device, and/or an audible notification generated by a speaker of the computing device.

According to a second aspect, embodiments of the invention provide a method for detecting a predefined event at an entrance area, the method comprising:
receiving a visual signal from a camera;
receiving an audio signal from a microphone device; and
triggering an alert (only) when both the visual signal and the audio signal indicate that the predefined event has occurred at the entrance area.

The method may be performed by the security system of the first aspect.

As such, the method may comprise:
determining whether the visual signal indicates that the predefined event has occurred, e.g. using a video analytics algorithm; and
determining whether the audio signal indicates that the predefined event has occurred using a directional audio analytics algorithm.

The method may comprise determining that the visual signal indicates that the predefined event has occurred when (i) a person is detected in the camera's field of view; (ii) when an object is detected within a predefined area in the camera's field of view; and/or (iii) when a predefined gesture is detected.

Thus, the method may comprise (i) detecting a person in the camera's field of view; (ii) detecting that the person is within a predefined area in the camera's field of view; and (iii) detecting that the person is performing a predefined gesture (e.g. knocking at a door at the entrance area).

The method may comprise determining that the audio signal indicates that the predefined event has occurred when (i) sound is detected, (ii) the sound detected meets one or more predefined criteria, such as a predefined type of sound and/or a predefined volume; and/or (iii) the sound detected is determined to be originating from within a predefined area.

Thus, the method may comprise (i) detecting sound by the microphone device; (ii) determining that the detected sound originates from within a predefined area; and (iii) determining that the sound is a predefined type of sound and/or is at a predefined volume.

The predefined type of sound may correspond to the predefined gesture, and the predefined area for sound detection may be the same predefined area for detecting the object.

The method may comprise steering an acoustic beam to the predefined area (e.g. by selectively shifting a phase of each microphone in a microphone array).

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
Figure 1 illustrates a system for detecting a predefined event, such as a knocking event, at an entrance area;
Figure 2 illustrates an arrangement of a camera and a microphone device of the system in Figure 1 at an entrance area;
Figure 3 shows a flowchart of a method for detecting a predefined event at an entrance area;
Figure 4 shows a flowchart of a method for determining that a predefined event has occurred from a video stream, which may be used in the method shown in Figure 3;
Figure 5 shows a flowchart of a method for determining that a predefined event has occurred based on sound detection, which may be used in the method shown in Figure 3; and
Figure 6 shows a flowchart of a method for determining that a predefined event has occurred based on sound detection using an acoustic beamformer, which may be used in the method shown in Figure 3.

### Detailed Description of the Invention

Aspects and embodiments of the present invention will now be discussed with reference to the accompanying figures. Further aspects and embodiments will be apparent to those skilled in the art.

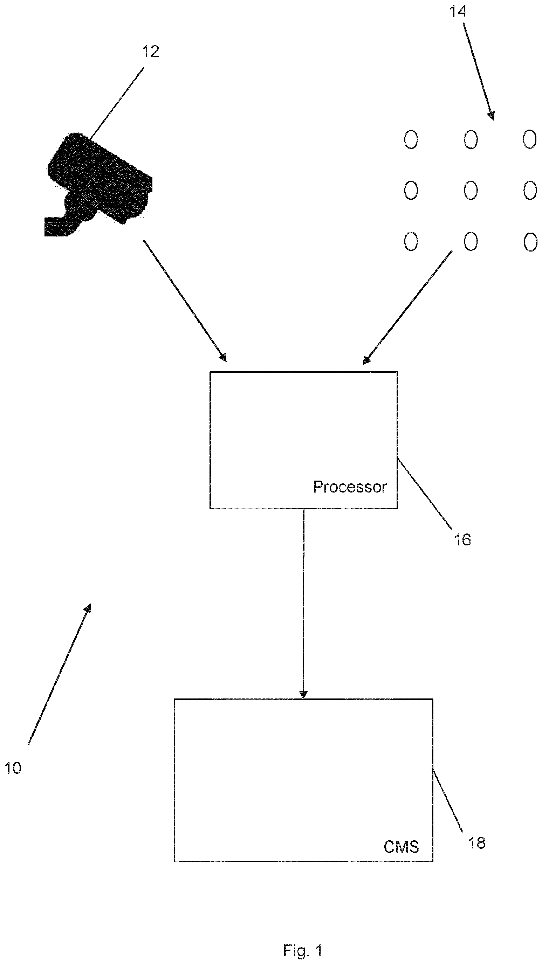

Figure 1 shows a system 10 for detecting a predefined event, such as a person knocking on a door, at an entrance area. The system 10 comprises a video camera 12, a microphone array 14, a processor 16 and an access control computing device 18 with a content management system (CMS). The access control computing device 18 comprises a display and a speaker (not shown) for alerting a user of the computing device 18 to the occurrence of a predefined event at the entrance area. The user of the computing device 18 (e.g. a security guard) can then choose whether or not to grant access to the person knocking on the door.

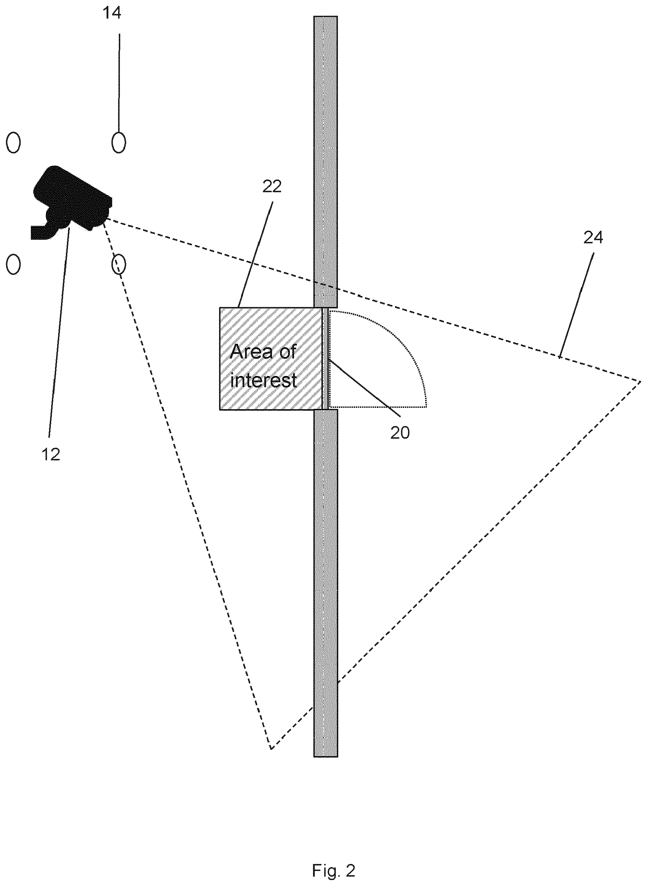

Figure 2 shows the video camera 12 and the microphone array 14 in position at an entrance area surrounding a door 20. The video camera 12 is positioned close to the door 20 and is angled to detect visually monitor an area of interest 22 including the door 20. The area of interest 22 may be smaller or similar in size to the field of view 24 of the camera 12.

Similarly, the microphone array 14 is positioned close to the door 20 and is arranged to detect sound in the area of interest 22. As discussed in further detail below, the microphone array may comprise a beamformer or may provide acoustic signals to a beamformer provided in software, and the beamformer may be steered towards the area of interest 22 in order to only detect sound originating from the area of interest 22 and to cancel sound originating from elsewhere.

The processor 16 may be located in or proximal to the entrance area including the door 20. Alternatively, the processor 16 may be located at a position remote from the entrance area. The computing device 18 is located remotely from the entrance area (for example, inside the building to which the door 20 provides access or elsewhere). In one example, the processor and microphone array 14 are installed within or on the housing of the camera 12.

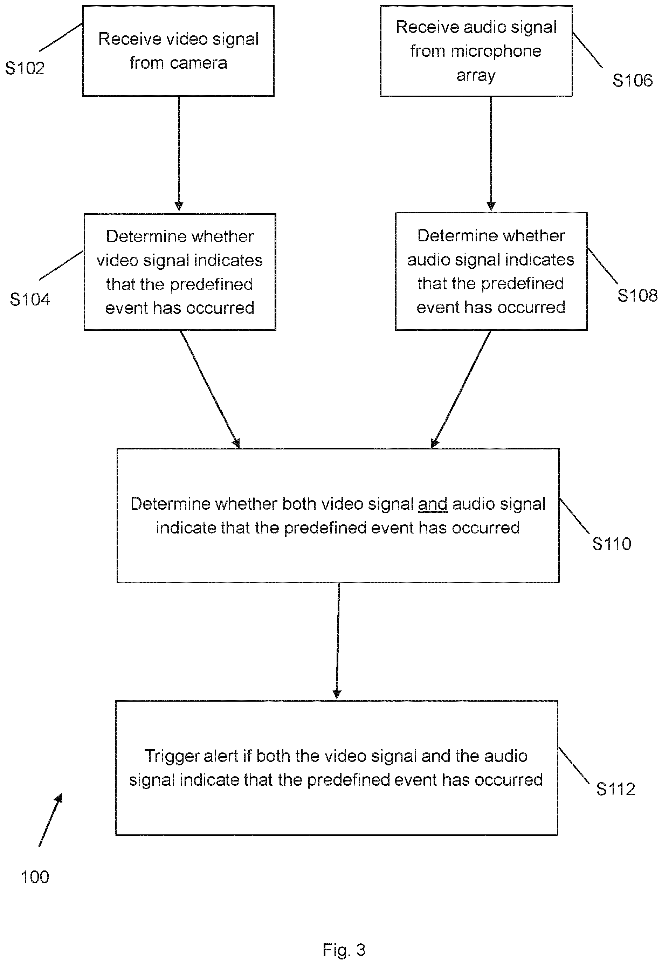

Figure 3 is a flowchart showing a method 100 for detecting knocking on the door 20 (or another predefined event at the entrance area).

The video camera 12 and the microphone array 14 are positioned at an entrance area, and arranged to detection motion and sound respectively at the entrance area, as shown in Figure 2. The video camera 12 and the microphone array 14 continuously monitor the entrance area.

At S102, a video signal is received at the processor 16 from the video camera 12. The video signal may be continuously received at the processor 16, and therefore be a continuous live stream of the entrance area. Alternatively, the video signal may only be received at the processor 16 following a trigger event, which may be when movement, or a predefined object such as a person, is detected by the video camera 12 in the camera's field of view.

Similarly, at S106, an audio signal is received at the processor 16 from the microphone array 14. The audio signal may be continuously received at the processor 16, therefore transmitting a live channel of any sound at the entrance area. Alternatively, the audio signal may only be received at the processor 16 following a trigger event, which may be when sound is detected by the microphone array 14.

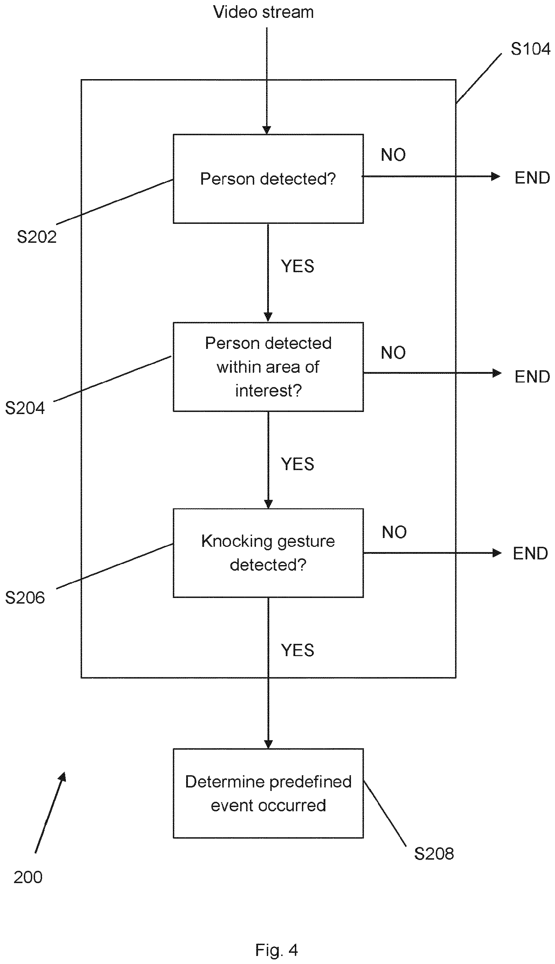

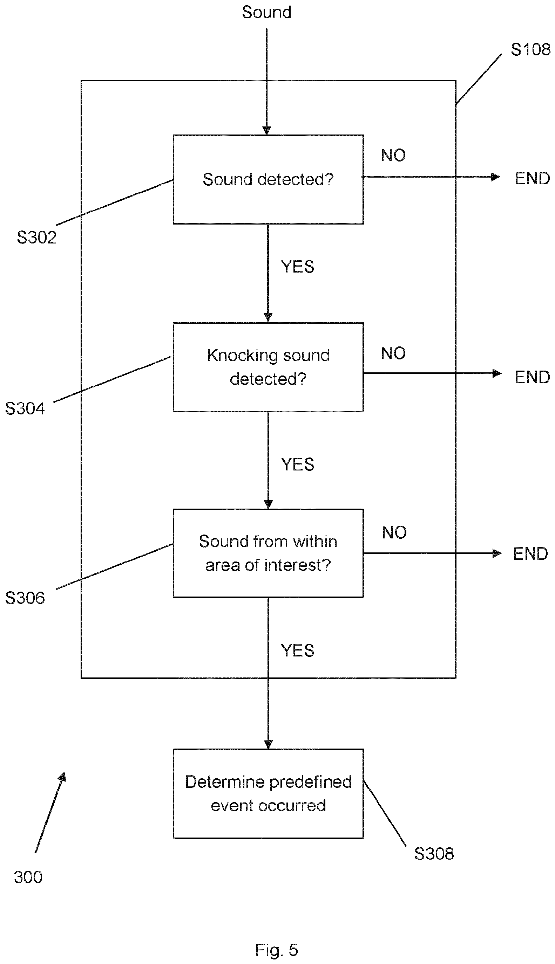

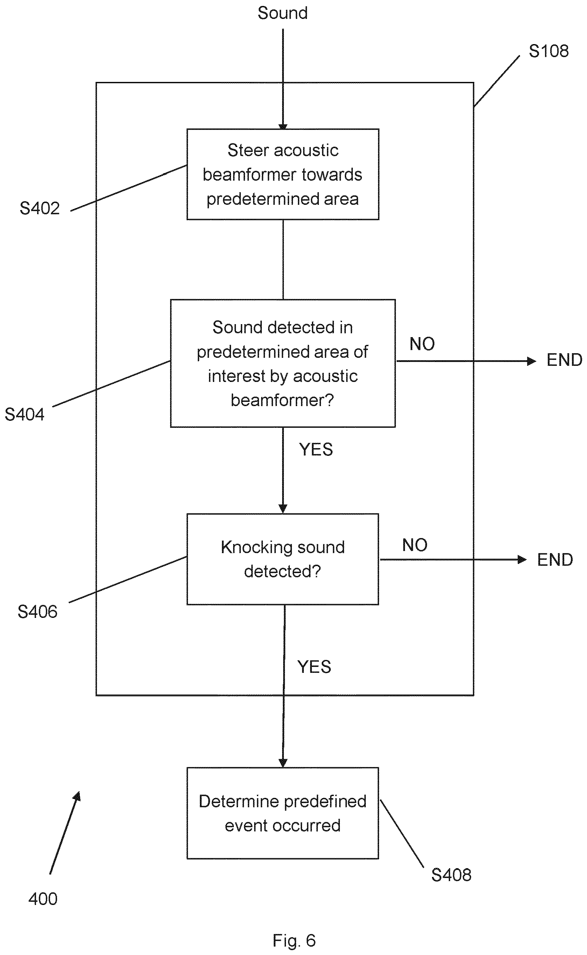

At S104, it is determined whether the video signal indicates that a person is knocking, or has recently knocked, on the door 20, using one or more video analytics algorithms. S.104 is discussed in further detail with respect to Figure 4 below. Similarly, at S108, it is determined whether the audio signal indicates that a person is knocking, or has recently knocked, on the door 20 using one or more directional audio analytics algorithms. S.108 is discussed in further detail with respect to Figures 5 and 6 below.

In Figure 3, S104 and S108 are performed at the processor 16, after receiving the video signal and audio signal from the video camera 12 and microphone array 14, respectively. In other examples, S104 and

S108 may be performed at distinct and separate processors, for example distinct and separate processors at the video camera 12 and the microphone array 14, respectively. In examples in which S104 and S108 are performed at processors at the video camera 12 and microphone array 14 respectively, S104 and S108 may be performed before S102 and S106, such that the video signal and audio signal received at the processor 16 themselves indicate that the knocking event has occurred.

At S110, the processor 16 determines whether both the video signal and the audio signal indicate that the knocking event has occurred. Optionally, the video signal and audio signal must both indicate that the knocking event has occurred within a predefined time period of each other, such as within 5 seconds. If neither, or only one of the video signal or the audio signal indicate that the knocking event has occurred, then no alert is triggered. However, in S112, if both the video signal and the audio signal indicate that the knocking event has occurred, the processor 16 triggers an alert which is transmitted to the computing device 18 (e.g. via a wireless interface or wired connection), which then, on receipt of the alert triggered by the processor 16, triggers an alert notification at the computing device 18. Therefore, there is two-factor verification in assessing whether the knocking event has occurred, which increases the accuracy of knocking event detection and reduces the possibility of false detections.

Figure 4 shows sub-steps of a method 200 for S104 of method 100 in Figure 3. In other words, Figure 4 shows a method 200 for determining whether the video signal indicates that the knocking event has occurred.

At S202, it is determined whether a person is detected in the video stream, using object recognition and object classification techniques, which are known *per se* in the art. If a person is not detected in the video stream, it is determined that no knocking event has occurred, no alert is triggered and method 200 ends. If a person is detected, the method moves to S204.

At S204, it is determined whether the person is detected within the predefined area of interest 22 (e.g. adjacent to the door) in the camera's field of view, using object localization techniques, which are known in *per se* the art. If the person is not detected in the predefined area of interest 22, it is determined that no knocking event has occurred, no alert is triggered, and method 200 ends. If a person is detected within the predefined area of interest 22, the method moves to S206.

At S206, it is determined whether the person is performing a predefined knocking gesture in the video stream, using gesture detection techniques such as by using a gesture detection algorithm, which are known *per se* in the art, for example by applying a pre-trained neural network (CNN, RCNN, etc.) to the video stream. If the predefined knocking gesture is not detected, it is determined that no knocking event has occurred, no alert is triggered, and method 200 ends. If the predefined knocking gesture is detected, the method moves to S208 and it is determined that the video signal indicates that the knocking event has occurred. The method then moves to S110 as described above in relation to Figure 3.

S202, S204 and S206 may be performed in any order, or simultaneously. Optionally, only some of S202, S204 and S206 are performed before moving to S208 (e.g. it may be required to detect a person, and detect that the person is within the area of interest before determining that the knocking event has occurred, but no knocking gesture is required to be detected).

Figure 5 shows sub-steps of a method 300 for S108 of method 100 in Figure 3. In other words, Figure 5 shows a method 300 for determining whether the audio indicates that the knocking event has occurred.

At S302, it is determined whether sound is detected by the microphone array. If no sound is detected, it is determined that no knocking event has occurred, no alert is triggered and method 300 ends. If sound is detected, the method moves to S304.

At S304, it is determined whether the sound is of a predefined type of sound, e.g. is a knocking sound, using one or more sound event detection algorithms that are known *per se* in the art. It may also be determined whether the sound meets a predefined volume threshold. If the sound is determined not to be a knocking sound (and/or if the sound does not meet the predefined volume threshold), it is determined that no knocking event has occurred, no alert is triggered, and method 300 ends. If it is determined that the detected sound is a knocking sound (and/or if the sound meets the predefined volume threshold), the method moves to S306.

At S306, it is determined whether the sound detected by the microphone array originates from within the predefined area of interest 22, using beam forming technology and/or spatial filtering. If the sound is determined to originate from outside of the predefined area of interest 22, it is determined that no knocking event has occurred, no alert is triggered, and method 300 ends. If it is determined that the detected sound originates from within the predefined area of interest 22, the method moves to S308, and it is determined that the audio signal indicates that the knocking event has occurred. The method then moves to S110 as described above in relation to Figure 3.

S302, S304 and S306 may be performed in any order, or simultaneously. Optionally, only some of S302, S304 and S306 are performed before moving to S308 (e.g. it may be required to detect sound, and detect that the sound is a knocking sound that meets or exceeds a predefined volume in order to move to S308, but it is not required to determine that the sound originates from within the predefined area of interest).

Figure 6 shows a method 400 for determining whether the audio signal indicates that the knocking event has occurred (e.g. S108 in Figure 3) using beamformer technology.

Specifically, in S402, the microphone array 14 is configured so as to steer an acoustic beamformer towards the predefined area of interest 22, by selectively shifting a phase of each microphone in the microphone array 14. Thus, the microphone array 14 only detects sound originating from within the predefined area of interest, and any sound originating from outside the area of interest is cancelled and therefore not detected.

In S404, it is determined whether sound is detected by the acoustic beamformer in the predefined area of interest 22. If no sound is detected, it is determined that no knocking event has occurred, no alert is triggered, and method 400 ends. If sound is detected by the acoustic beamformer, the method moves to S406.

In S406, similarly to S304, it is determined whether the sound is of a predefined type of sound, e.g. is a knocking sound, using one or more sound event detection algorithms that are known *per se* in the art. It may also be determined whether the sound meets a predefined volume threshold. If the sound is determined not to be a knocking sound (and/or if the sound does not meet the predefined volume threshold), it is determined that no knocking event has occurred, no alert is triggered, and method 400 ends. If it is determined that the detected sound is a knocking sound (and/or if the sound meets the predefined volume threshold), the method moves to S408, and it is determined that the audio signal indicates that the knocking event has occurred. The method then moves to S110 as described above in relation to Figure 3.

The processor 16 and/or the computing device 18 is configured to store and tag any knocking event detections in a memory so that the knocking events can be analysed later for a history overview and to gain insights into event history. Furthermore, the processor 16 and/or computing device 18 may also store and tag any instances where only one or the audio signal and video signal indicated that a knocking event has occurred, in order to gain further insights into event history.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A security system for detecting a predefined event at an entrance area, the system comprising:
a camera for visually monitoring the entrance area;
a microphone device for detecting sound at the entrance area; and
a processor configured to:
receive a visual signal from the camera and an audio signal from the microphone device; and
trigger an alert when both the visual signal and the audio signal indicate that the predefined event has occurred.

2. The security system of claim 1, wherein the predefined event is an event external to the camera and microphone device.

3. The security system of claim 1 or claim 2, wherein:
the visual signal indicates that the predefined event has occurred when a predefined object, or movement of an object, is detected by the camera; and
the audio signal indicates that the predefined event has occurred when sound is detected by the microphone device.

4. The security system of any preceding claim, wherein the security system is configured to:
determine whether the visual signal indicates that the predefined event has occurred using a video analytics algorithm; and
determine whether the audio signal indicates that the predefined event has occurred using a directional audio analytics algorithm.

5. The security system of any preceding claim, wherein the visual signal indicates that the predefined event has occurred when:
a person is detected in the camera's field of view;
an object is detected within a predefined area in the camera's field of view; and/or
a predefined gesture is detected.

6. The security system of any preceding claim, wherein the visual signal indicates that the predefined event has occurred when a person performing a predefined gesture is detected within a predefined area in the camera's field of view.

7. The security system of any preceding claim, wherein the audio signal indicates that the predefined event has occurred when sound detected by the microphone device meets one or more predefined criteria.

8. The security system of any preceding claim, wherein the audio signal indicates that the predefined event has occurred when sound detected by the microphone device is determined to be originating from within a predefined area, and/or is of a predefined type of sound.

9. The security system of any preceding claim, wherein the visual signal indicates that the predefined event has occurred when a person performing a predefined gesture is detected within a predefined area in the camera's field of view; and the audio signal indicates that the predefined event has occurred when sound detected by the microphone device is determined to be originating from within the predefined area in the camera's field of view, and is of a predefined type of sound corresponding to the predefined gesture.

10. The security system of any preceding claim, wherein the microphone device comprises an acoustic beamformer configured to steer an acoustic beam to a predefined area.

11. The security system of any preceding claim, comprising a plurality of cameras for visually monitoring the entrance area, and a plurality of microphone devices for detecting sound at the entrance area, wherein the processor is configured to:
receive a visual signal from each of the plurality of cameras, and an audio signal from each of the plurality of microphone devices; and
trigger the alert when one or more of the plurality of visual signals and one or more of the plurality of audio signals indicate that the predefined event has occurred.

12. The security system of any preceding claim, wherein the processor is configured to store and tag a record of the detected predefined event in a memory.

13. The security system of any preceding claim, further comprising an access control computing device, wherein the access control computing device is configured to receive the alert triggered by the processor and provide an alert notification to a user.

14. A method for detecting a predefined event at an entrance area, the method comprising:
receiving a visual signal from a camera;
receiving an audio signal from a microphone device; and
triggering an alert when both the visual signal and the audio signal indicate that the predefined event has occurred at the entrance area.

15. The method of claim 14, further comprising:
steering an acoustic beam to a predefined area.
